# EUROPÄISCHE PATENTSCHRIFT

(11) **EP 1 019 679 B1**
(45) Veröffentlichungstag und Bekanntmachung des Hinweises auf die Patenterteilung: **22.05.2013**
(21) Anmeldenummer: 99910082.9
(22) Anmeldetag: 28.01.1999
(51) Int. Cl.: G01F 1/684

(54) **MESSVORRICHTUNG ZUM MESSEN DER MASSE EINES STRÖMENDEN MEDIUMS**
MEASURING DEVICE FOR MEASURING THE MASS OF A FLOWING MEDIUM
DISPOSITIF POUR MESURER LA MASSE D'UN FLUIDE EN ECOULEMENT

(30) Priorität: 08.04.1998 DE 19815656
(43) Veröffentlichungstag der Anmeldung: 19.07.2000
(73) Patentinhaber: ROBERT BOSCH GMBH, 70442 Stuttgart (DE)
(72) Erfinder: MÜLLER, Wolfgang, D-71277 Rutesheim (DE); TANK, Dieter, D-70806 Kornwestheim (DE); KONZELMANN, Uwe, D-71679 Asperg (DE)
(86) Internationale Anmeldenummer: PCT/DE1999/000207
(87) Internationale Veröffentlichungsnummer: WO 1999/053276

(56) Entgegenhaltungen:
- EP-A- 0 313 089
- EP-A- 0 708 315
- DE-A- 4 407 209
- GB-A- 2 316 750

## Beschreibung

### Stand der Technik

Die Erfindung geht aus von einer Vorrichtung zur Messung der Masse eines strömenden Mediums nach der Gattung der Präambel von Anspruch 1. Eine des artige Vorrichtung ist bekannt aus der EP 0 313 089 A2.

Es ist bereits in der DE 44 07 209 A1 eine Vorrichtung vorgeschlagen worden, die einen sich quer zur Strömung des Mediums erstreckenden Trägerkörper hat, der steckbar in eine aus einer Begrenzungswandung der Strömung ausgenommene Öffnung eingeführt ist. Die Begrenzungswandung stellt beispielsweise eine Wandung eines Ansaugrohres dar, durch das hindurch eine Brennkraftmaschine Luft aus der Umgebung ansaugt. Der Trägerkörper hat eine längliche Form und besitzt an seinem in das strömende Medium ragenden, freien Endbereich einen Meßkanal, der vom Medium durchströmt wird. Im Meßkanal ist ein temperaturabhängiges Meßelement untergebracht, das in sogenannter mikromechanischer Bauweise ausgebildet ist. Derartige Meßelemente sind z. B. aus der DE 195 24 634 A1 bekannt und besitzen auf einem plattenförmigen Träger einen durch Ausätzen eines Siliziumwafers hergestellten Sensorbereich, der mit mehreren Widerstandsschichten wenigstens einen temperaturabhängigen Meßwiderstand bildet. Der Sensorbereich umfaßt nur einen kleinen Ausschnitt auf dem Träger und besitzt eine äußerst geringe Dicke, um mit schneller Reaktionszeit Änderungen der Strömungsgeschwindigkeit, beziehungsweise Änderungen der Masse des strömenden Mediums zu erfassen.

Beim Betrieb der Brennkraftmaschine herrscht durch das Öffnen und Schließen der Einlaßventile der Brennkraftmaschine eine stark pulsierende Strömung im Ansaugrohr vor, die turbulenten Charakter hat. Der Einfluß der Pulsationen in der Strömung wird durch die Unterbringung des Meßelements im Meßkanal gedämpft.

Aus der DE 44 41 874 A1 ist es bekannt, an der Einlaßöffnung des Meßkanals ein Strömungshindernis vorzusehen, das eine meßkanalwirksame, definierte Strömungsablösung bewirkt. Bei diesem Strömungshindernis kann es sich z. B. um eine Stolperkazite oder einen Stolperdraht handeln. Durch diese Maßnahme wird die Turbulenz in dem Strömungskanal verringert, was sich in einem reduzierten Meßsignalrauschen äußert.

Aus der DE 43 40 882 A1 ist es bekannt, in einem Meßkanal einer Vorrichtung zur Messung der Masse eines strömenden Mediums eine Innenhülse mit Reibfläche vorzusehen. An der Reibfläche werden Wirbel induziert, die den Strömungswiderstand verändern und so zu einer beabsichtigten Meßkorrektur führen. Anstatt der Innenhülse können auch Lamellen als Mittel zur Strömungsbeeinflussung vorgesehen sein.

### Vorteile der Erfindung

Die erfindungsgemäße Meßvorrichtung mit den kennzeichnenden Merkmalen des Anspruchs 1 hat demgegenüber den Vorteil, daß die Meßvorrichtung durch geeignete Dimensionierung der Erhebung besonders feinfühlig abgestimmt werden kann und durch die Pulsation der Strömung bedingte systematische Meßfehler beseitigt oder zumindest verringert werden können. Während durch geeignete Dimensionierung der Länge, des Strömungswiderstands und des Kanalquerschnitts des Meßkanals bereits eine grobe Minimierung des Pulsationsfehlers erreicht wird, kann durch Optimierung der Anordnung, der Form, der Länge, der Höhe und anderer Parameter der in der Umgebung der Auslaßöffnung des Umlenkkanals vorgesehenen Erhebung eine sehr feinfühlige Beeinflussung und somit Minimierung des Pulsationsfehlers erzielt werden.

Die Erhebung ist in einem der Hauptströmungsrichtung der Leitung abgewandten Umgebungsbereich der Auslaßöffnung des Umlenkkanals vorgesehen . Beim Anordnen der Erhebung in Hauptströmungsrichtung stromabwärts der Auslaßöffnung wird der Pulsationsfehler in Richtung einer Mehranzeige verschoben.

Ist die Erhebung in dem der Hauptströmungsrichtung abgewandten Umgebungsbereich der Auslaßöffnung angeordnet, ist es vorteilhaft, die Erhebung zumindest in einem der Hauptströmungsrichtung zugewandten Stirnbereich abzurunden. Die Erhebung ist wellenförmig ausgeformt und stetig so gekrümmt, daß sie im bezüglich der Hauptströmungsrichtung der Leitung stromabwärtigen Bereich ohne Kantenbildung in eine Ebene übergeht, in welcher sich die die Auslaßöffnung aufweisende Außenfläche erstreckt. Es kommt dabei im Bereich der Erhebung zu einer relativ geringen Verwirbelung der Strömung und die Erhebung setzt der Hauptströmung der Leitung einen relativ geringen Strömungswiderstand entgegen.

### Zeichnung

Ausführungsbeispiele der Erfindung sind in der Zeichnung vereinfacht dargestellt und in der nachfolgenden Beschreibung näher erläutert. Es zeigen:
- Fig. 1: in teilweiser Schnittdarstellung eine Seitenansicht einer Meßvorrichtung, welche lediglich der Erläuterung dient.
- Fig. 2: eine aussehnittsweise, vergrößerte Schnittdarstellung einer Seitenansicht einer erfindungsgemäß ausgebildeten Meßvorrichtung

### Beschreibung der Ausführungsbeispiele

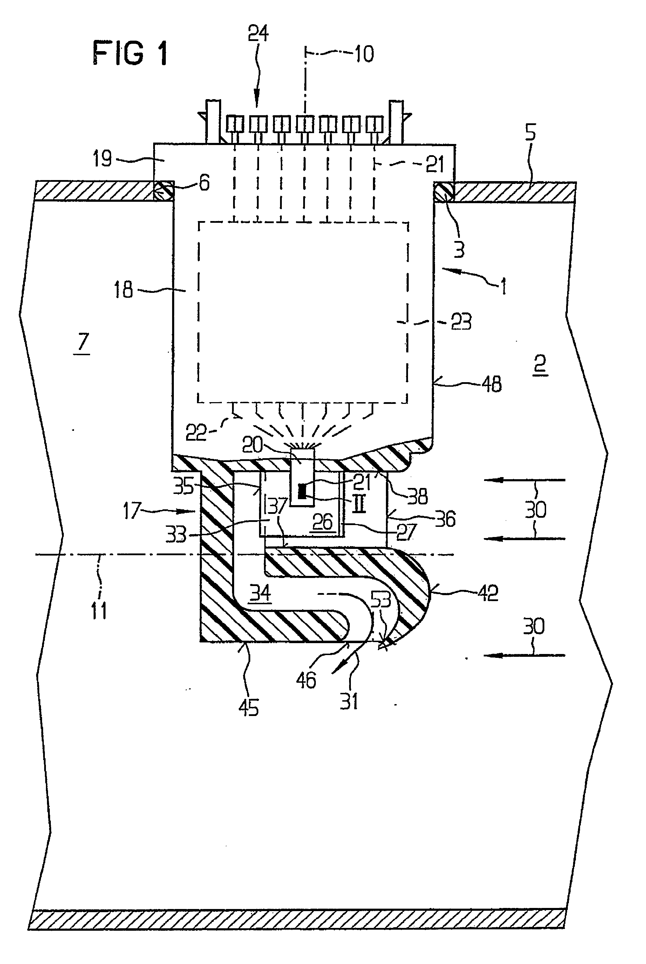

Fig. 1 zeigt in teilweiser Schnittdarstellung eine Seitenansicht einer mit 1 gekennzeichneten Meßvorrichtung, die zur Messung der Masse eines strömenden Mediums, insbesondere der Ansaugluftmasse von Brennkraftmaschinen, dient.

Die Meßvorrichtung 1 hat vorzugsweise eine schlanke, sich radial in Richtung einer Längsachse 10 länglich erstreckende, quaderförmige Gestalt und ist in eine aus einer Begrenzungswandung 5 einer Leitung 2 ausgenommenen Öffnung 6 beispielsweise steckbar eingeführt. Die Begrenzungswandung 5 stellt beispielsweise eine Wandung eines Ansaugrohres dar, durch das hindurch die Brennkraftmaschine Luft aus der Umgebung ansaugt. Die Begrenzungswandung 5 begrenzt einen Strömungsquerschnitt 7, der z. B. im Fall eines zylindrischen Ansaugrohres etwa einen kreisrunden Querschnitt aufweist, in dessen Mitte sich in axialer Richtung, parallel zur Begrenzungswandung 5 eine Mittelachse 11 erstreckt, die im Ausführungsbeispiel senkrecht zur Längsachse 10 der Meßvorrichtung 1 orientiert ist. Die Meßvorrichtung 1 ist mittels eines Dichtungsringes 3 in der Begrenzungswandung 5 abgedichtet und beispielsweise mittels einer nicht näher dargestellten Schraubverbindung mit dieser fest verbunden.

Die Meßvorrichtung 1 ragt mit einem im folgenden als Meßteil 17 bezeichneten Teil in das strömende Medium, wobei der Meßteil 17 beispielsweise etwa in der Mitte des Strömungsquerschnitts 7 von der Mittelachse 11 symmetrisch aufgeteilt wird, damit das strömende Medium ein im Meßteil 17 untergebrachtes temperaturabhängiges Meßelement 20 möglichst ohne störende Randeinflüsse der Begrenzungswandung 5 anströmt. In den Ausführungsbeispielen in den Fig. 1, 2 und 3 strömt das Medium von rechts nach links, wobei die Hauptströmungsrichtung durch entsprechende Pfeile 30 gekennzeichnet ist.

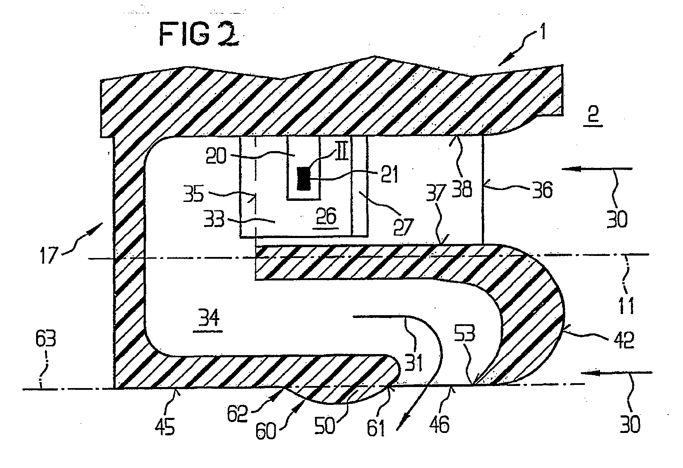

Die Meßvorrichtung 1 setzt sich einstückig aus dem Meßteil 17, einem Trägerteil 18 und einem Halteteil 19 zusammen und ist z. B. aus Kunststoff in Kunststoffspritzgußtechnik hergestellt. Das Meßelement 20 kann durch Ausätzen eines Halbleiterkörpers, beispielsweise eines Siliziumwafers, in sogenannter mikromechanischer Bauweise hergestellt werden und besitzt einen Aufbau, der z. B. der DE 195 24 634 A1 entnehmbar ist. Das Meßelement 20 hat einen durch Ausätzen entstandenen membranförmigen Sensorbereich 21, der in den Fig. 1 und 2 von einer Linie II begrenzt wird. Der Sensorbereich 21 hat eine äußerst geringe Dicke und besitzt mehrere, ebenfalls durch Ausätzen entstandene Widerstandsschichten, die wenigstens einen temperaturabhängigen Meßwiderstand und beispielsweise einen Heizwiderstand bilden.

Das Meßelement 20 ist als sogenanntes Heißfilmsensorelement vorzusehen, dessen Aufbau beispielsweise der DE-OS 36 38 138 entnehmbar ist. Derartige Heißfilm-Sensorelemente besitzen ebenfalls auf einem plattenförmigen Substrat aufgebrachte einzelne Widerstandsschichten, die wenigstens einen temperaturabhängigen Meßwiderstand und beispielsweise wenigstens einen Heizwiderstand umfassen.

Die einzelnen Widerstandsschichten des Meßelements 20, bzw. des Sensorelements 21, sind mittels im Innern der Meßvorrichtung 1 verlaufenden Anschlußleitungen 22 mit einer in der Fig. 1 gestrichelt dargestellten elektronischen Auswerteschaltung 23 elektrisch verbunden. Die elektronische Auswerteschaltung 23 enthält beispielsweise eine brückenähnliche Widerstandsmeßschaltung. Die Auswerteschaltung 23 ist z. B. im Trägerteil 18 oder im Halteteil 19 der Meßvorrichtung 1 untergebracht. Mit einer am Halteteil 19 vorgesehenen Steckverbindung 24 können die von der Auswerteschaltung 23 bereitgestellten elektrischen Signale beispielsweise einem weiteren elektronischen Steuergerät zur Auswertung zugeführt werden, welches unter anderem Funktionen der elektronischen Leerlaufsteuerung oder der Motorleistungssteuerung der Brennkraftmaschine steuert. Im dargestellten Ausführungsbeispiel ist das Meßelement 20 in ein Plättchen 26, vorzugsweise aus Metall eingelassen, das eine der Hauptströmungsrichtung 30 entgegengerichtete Schneide 27 aufweisen kann. Auf eine ausführliche Beschreibung der Funktion und des Aufbaus des temperaturabhängigen Meßelements 20 wird verzichtet, da dies der Fachmann dem Stand der Technik entnehmen kann.

Der Meßteil 17 der Meßvorrichtung 1 besitzt beispielsweise eine quaderförmige Gestalt, einen sich in axialer Richtung im Meßteil 17 erstreckenden Meßkanal 33 und einen z. B. eine S-Form aufweisenden Umlenkkanal 34. Der Meßkanal 33 erstreckt sich in Richtung der Mittelachse 11 axial im Meßteil 17 von einer, z. B. einen rechteckförmigen Querschnitt aufweisenden Einlaßöffnung 36 bis zu einer Mündung 35. Der Meßkanal 33 ist von einer der Mittelachse 11 entfernteren Oberfläche 38 und einer der Mittelachse 11 näheren Unterfläche 37 sowie zwei Seitenflächen begrenzt. Anstelle den Meßkanal 33 exzentrisch zur Mittelachse 11 anzuordnen, ist es auch möglich, diesen zentrisch oder im Bereich der Mittelachse 11 der Begrenzungswandung 5 anzuordnen. Das plattenförmige Meßelement 20 ist im Meßkanal 33 mit seiner größten Erstreckung radial in Richtung der Längsachse 10 orientiert und wird symmetrisch von dieser aufgeteilt. Das Meßelement 20 ist mit einem seiner schmalen Enden einseitig im Trägerteil 18 an der Oberfläche 38 gehalten, so daß dieses mit seinen beiden Seitenflächen in etwa parallel zur Mittelachse 11 vom Medium umströmt wird. Das Medium strömt von der Einlaßöffnung 36 des Meßkanals 33 zum Meßelement 20 und von diesem in den Umlenkkanal 34, um den Umlenkkanal 34 in radialer Richtung in Richtung eines in den Fig. 1 und 2 eingezeichneten Pfeils 31 aus einer Auslaßöffnung 46 zu verlassen.

Das aus der Auslaßöffnung 46 herausströmende Medium vermischt sich anschließend wieder mit dem um die Meßvorrichtung 1 herumströmenden Medium. Die Auslaßöffnung 46 besitzt wie der Umlenkkanal 34 beispielsweise einen rechteckförmigen Querschnitt und ist an einer parallel zur Mittelachse 11 orientierten Außenfläche 45 des Meßteils 17 vorgesehen. Bezüglich der Hauptströmungsrichtung 30 stromaufwärts der rechteckförmigen Auslaßöffnung 46 schließt sich quer zur unteren Außenfläche 45 eine der Hauptströmungsrichtung 30 entgegenstehende Berandungsfläche 42 des Meßteils 17 an, die stromaufwärts der Einlaßöffnung 36 in abgerundeter Form von der Außenfläche 45 zur Unterfläche 37 des Meßkanals 33 bis an die Einlaßöffnung 36 führt.

Erfindungsgemäß ist an der die Auslaßöffnung 46 aufweisenden Außenfläche 45 der Meßvorrichtung 1 in der Umgebung der Auslaßöffnung 46 zumindest eine Erhebung 50 vorgesehen.

Fig. 2 zeigt ein Ausführungsbeispiel der erfindungsgemäßen Meßvorrichtung 1, wobei die Erhebung 50 in einem der Hauptströmungsrichtung 30 abgewandten Umgebungsbereich 60 der Auslaßöffnung 46 angeordnet ist. Dabei ist die Erhebung 50 wellenförmig ausgeformt und ist in einem der Hauptströmungsrichtung 30 zugewandten Stirnbereich 61 abgerundet. In dem Stirnbereich 61 der Erhebung 50 wird ein Staudruck aufgebaut, welcher die Durchströmung des Meßkanals 33 und des Umlenkkanals 34 erschwert. Ein als systematischer Meßfehler auftretender Pulsationsfehler wird in Richtung einer Mehranzeige verschoben und kann entsprechend kompensiert werden. Gleichzeitig wird im Fall einer Rückströmung in der Leitung 2 entgegen der Hauptströmungsrichtung 30 einer Durchströmung des Umlenkkanals 34 und des Meßkanals 33 in Rückströmungsrichtung entgegengewirkt.

Wie aus Fig. 2 zu erkennen, ist die Erhebung 50 bei dem in Fig. 3 dargestellten Ausführungsbeispiel stetig gekrümmt und geht im bezüglich der Hauptströmungsrichtung 30 stromabwärtigen Bereich 62 ohne Kantenbildung in eine Ebene 63 über, in welcher sich die die Auslaßöffnung 46 aufweisende Außenfläche 45 erstreckt.

Während durch geeignete Dimensionierung der Länge, des Strömungswiderstands und das Kanalquerschnitts des Meßkanals 33 und des Umlenkkanals 34 in der Praxis auftretende Pulsationsfehler bereits grob minimiert werden können, ist es durch die zumindest eine erfindungsgemäß vorgesehene Erhebung 50 im Umgebungsbereich der Auslaßöffnung 46 des Umlenkkanals 34 möglich, die Pulsationsfehler sehr feinfühlig zu kompensieren und somit zu beseitigen. Wenn die Meßvorrichtung 1 ohne die erfindungsgemäßen Erhebungen 50 aufgrund der Pulsationsfehler zu einer Minderanzeige neigt, ist die Erhebung 50 in dem der Hauptströmungsrichtung 30 abgewandten Umgebungsbereich 60 der Auslaßöffnung 46 entsprechend dem in Fig. 2 dargestellten Ausführungsbeispiel anzuordnen. Versuche haben ergeben, daß bereits eine Erhöhung der Erhebung 50 um ca. 0,5 mm zu einer Verringerung des Pulsationsfehlers um 5 % bis 10 % führt. Durch Optimierung der Höhe und der Form der Erhebung 50 kann daher der Pulsationsfehler weitgehend verringert oder gar beseitigt werden.

## Patentansprüche

1. Messvorrichtung (1) zum Messen der Masse eines in einer Leitung (2) entlang einer Hauptströmungsrichtung (30) strömenden Mediums, wobei die Leitung (2) eine einen kreisrunden Strömungsquerschnitt (7) begrenzende Begrenzungswandung (5) aufweist und wobei sich eine Mittelachse (11) in der Mitte des kreisrunden Strömungsquerschnitts (7) in einer axialen Richtung parallel zu der Begrenzungswandung (5) erstreckt, mit einem von strömenden Medium umströmten Messelement (21), das als Heißfilmsensorelement ausgebildet ist und das in einem in der Leitung (2) vorgesehenen Messkanal (33) angeordnet ist, der sich in der axialen Richtung von einer Einlassöffnung (36) des Messkanals (33) zu einem Umlenkkanal (34) erstreckt, wobei der Umlenkkanal (34) zu einer an einer Außenfläche (45) der Messvorrichtung (1) in die Leitung (2) ausmündenden Auslaßöffnung (46) führt, in deren Umgebung an der Außenfläche (45) zumindest eine Erhebung (50) vorgesehen ist, die in einem der Hauptströmungsrichtung (30) abgewandten Umgebungsbereich (60) der Auslassöffnung (46) angeordnet ist, **dadurch gekennzeichnet, dass** die Erhebung wellenförmig ausgeformt ist und in einem der Hauptströmungsrichtung (30) zugewandten Stirnbereich (61) abgerundet ist und stetig gekrümmt in einen bezüglich der Hauptströmungsrichtung (30) der Leitung (2) stromabwärtigen Bereich (62) ohne Kantenbildung in eine Ebene (63) übergeht, in welcher sich die die Auslassöffnung (46) aufweisende Außenfläche (45) erstreckt.

2. Messvorrichtung nach Anspruch 1, **dadurch gekennzeichnet, dass** das strömende Medium die Ansaugluftmasse einer Brennkraftmaschine ist.

## Claims

1. Measuring device (1) for measuring the mass of a medium flowing in a line (2) along a main flow direction (30), the line (2) having a boundary wall (5) bounding a circular flow cross section (7), and a middle axis (11) in the middle of the circular flow cross section (7) extending in an axial direction parallel to the boundary wall (5), comprising a measuring element (21) which is flowed around by flowing medium, is designed as a hot film sensor element, and is arranged in a measurement conduit (33) which is provided in the line (2) and extends in the axial direction from an inlet opening (36) of the measurement conduit (33) to a deflection conduit (34), the deflection conduit (34) leading to an outlet opening (46) which discharges into the line (2) at an outer face (45) of the measuring device (1) and in whose surroundings there is provided at the outer face (45) at least one protuberance (50) which is arranged in an ambient region (60) of the outlet opening (46) averted from the main flow direction (30), **characterized in that** the protuberance is shaped in an undulating fashion, is rounded off in an end region (61) facing the main flow direction (30) and, in a fashion continuously curving into a downstream region (62) with reference to the main flow direction (30) of the line (2), merges, without forming an edge, into a plane (63) in which the outer face (45) having the outlet opening (46) extends.

2. Measuring device according to Claim 1, **characterized in that** the flowing medium is the intake air mass of an internal combustion engine.

## Revendications

1. Dispositif de mesure (1) pour mesurer la masse d'un fluide s'écoulant dans une conduite (2) le long d'une direction d'écoulement principale (30), la conduite (2) présentant une paroi de limitation (5) limitant une section transversale d'écoulement ronde circulaire (7) et un axe médian (11) s'étendant au centre de la section transversale d'écoulement ronde circulaire (7) dans une direction axiale parallèle à la paroi de limitation (5), avec un élément de mesure (21) autour duquel circule le fluide s'écoulant, qui est réalisé sous forme d'élément de capteur à film chaud et qui est disposé dans un canal de mesure (33) prévu dans la conduite (2), lequel canal de mesure s'étend dans la direction axiale depuis une ouverture d'entrée (36) du canal de mesure (33) jusqu'à un canal de déviation (34), le canal de déviation (34) conduisant à une ouverture de sortie (46) débouchant au niveau d'une surface extérieure (45) du dispositif de mesure (1) dans la conduite (2), dans l'environnement de laquelle ouverture de sortie, au niveau de la surface extérieure (45), est prévu au moins un rehaussement (50) qui est disposé dans une région (60) dans l'environnement de l'ouverture de sortie (46) opposée à la direction d'écoulement principale (30), **caractérisé en ce que** le rehaussement est façonné sous forme ondulée et est arrondi dans une région frontale (61) tournée vers la direction d'écoulement principale (30) et se prolonge avec une courbure constante dans une région (62) en aval par rapport à la direction d'écoulement principale (30) de la conduite (2) sans formation d'arête par un plan (63) dans lequel s'étend la surface extérieure (45) présentant l'ouverture de sortie (46).

2. Dispositif de mesure selon la revendication 1, **caractérisé en ce que** le fluide s'écoulant est la masse d'air d'admission d'un moteur à combustion interne.
